# EUROPEAN PATENT APPLICATION

(11) **EP 4 170 850 A1**
(43) Date of publication of application: **26.04.2023**
(21) Application number: 20941242.8
(22) Date of filing: 17.06.2020
(51) Int. Cl.: H02J 3/38, G06Q 10/04

(54) **WIND FARM LAYOUT OPTIMIZATION METHOD AND OPTIMIZATION SYSTEM, AND COMPUTER-READABLE STORAGE MEDIUM**

(71) Applicant: Shanghai Electric Wind Power Group Co., Ltd., Shanghai 200241 (CN); SEWPG European Innovation Center ApS, 8000 Aarhus C (DK)
(72) Inventor: HOU, Peng, Shanghai 200241 (CN); ZHU, Jiangsheng, Shanghai 200241 (CN); JIN, Rongsen, Shanghai 200241 (CN); CHEN, Le, Shanghai 200241 (CN); MENG, Xiaogang, Shanghai 200241 (CN); MIAO, Jun, Shanghai 200241 (CN)
(74) Representative: Dai, Simin
(86) International application number: PCT/CN2020/096605
(87) International publication number: WO 2021/253291

(57) **Abstract**

A wind farm layout optimization method and optimization system, and a computer readable storage medium. A wind farm includes a plurality of nodes and the plurality of nodes include a booster station and a plurality of wind turbines. The optimization method includes: obtaining wind turbine position coordinates of the plurality of wind turbines (101); and, according to the wind turbine position coordinates, solving an optimization problem with minimization of an objective function of a cable cost of the wind farm as target by using meta-heuristic algorithm to obtain an optimized solution of a position coordinate of the booster station, an optimized solution of a connection relationship of the plurality of nodes and an optimized solution of cable information of a plurality of paths connecting the plurality of nodes (102); where the connection relationship represents whether paired nodes of the plurality of nodes are connected. The objective function includes a cable power loss determined based on a power flow of the wind farm.

## Description

### TECHNICAL FIELD

The present application relates to the field of planning technologies of wind farms, and in particular to a method and a system for optimizing a layout of a wind farm and a computer readable storage medium.

### BACKGROUND

Wind is one of energy sources without public hazard as well as an inexhaustible energy source. For offshore islands, grassland pastures, mountainous areas and plateaus with lack of water and fuel supply and traffic inconveniences, it is very suitable and promising to carry out wind power generation in consideration of local characteristics. Wind power generation is to convert wind energy into electric energy. Since the wind power generation is environment-friendly and there is a huge amount of reserves of wind energy, it draws more and more attention of the counties all over the world. The layout of cables of a wind farm and the site selection of a booster station have great impact on the costs of the wind farm. It becomes an important task to optimize the layout of the cables and the site selection of the booster station in order to optimize the layout of the wind farm.

### SUMMARY

The present application provides an improved method and a system for optimizing a layout of a wind farm and a computer readable storage medium.

According to a first aspect of embodiments of the present application, there is provided a method of optimizing a layout of a wind farm. The wind farm includes a plurality of nodes which include a booster station and a plurality of wind turbines. The optimization method includes: obtaining wind turbine position coordinates of the plurality of wind turbines; and, according to the wind turbine position coordinates, solving an optimization problem with minimization of an objective function of a cable cost of the wind farm as target by using meta-heuristic algorithm to obtain an optimized solution of a position coordinate of the booster station, an optimized solution of a connection relationship of the plurality of nodes and an optimized solution of cable information of a plurality of paths connecting the plurality of nodes; where the connection relationship represents whether paired nodes of the plurality of nodes are connected, and the objective function includes a cable power loss determined based on a power flow of the wind farm.

According to another aspect of embodiments of the present application, there is provided a system for optimizing a layout of a wind farm, including one or more processors for performing the above optimization method.

According to another aspect of embodiments of the present application, there is provided a computer readable storage medium storing a program thereon, where when the program is executed by a processor, the processor is caused to perform the above optimization method.

In the optimization method according to some embodiments of the present application, the influence of the power flow of the wind farm is taken into account to consider the influence of the cable power loss on the cable cost of the wind farm; and further, by using meta-heuristic algorithm, optimization is performed for the site selection of the booster station, the connection relationship of the nodes and the cable of each path at the same time to increase the optimization effect on the cost to a greater extent and thus obviously improve the economic performance of the overall electrical design of the wind farm.

### BRIEF DESCRIPTION OF THE DRAWINGS

In order to more clearly describe the technical solutions in the embodiments of the present application, the drawings required for description of the embodiments will be briefly introduced. Apparently, the drawings described hereunder are only some embodiments, and those skilled in the art can obtain other drawings based on these drawings without making creative work.
FIG. 1 is a flowchart illustrating a method of optimizing a layout of a wind farm according to an embodiment of the present application.
FIG. 2 is a sub-flowchart of a step of solving an optimization problem with minimization of an objective function of a cable cost of a wind farm as target by using meta-heuristic algorithm in the method shown in FIG. 1.
FIG. 3 is a sub-flowchart of a step of determining a feasible solution of an objective function as shown in FIG. 2.
FIG. 4 is a sub-flowchart of a step of performing power flow calculation as shown in FIG. 2.
FIG. 5 is a schematic diagram illustrating positions of wind turbines of a wind farm.
FIG. 6 is a schematic diagram illustrating a wind farm layout obtained by performing layout optimization for the wind farm of FIG. 5 by using the method of the embodiments of the present application.
FIG. 7 is a block diagram illustrating a system for optimizing a layout of a wind farm according to an embodiment of the present application.

### DETAILED DESCRIPTION OF THE EMBODIMENTS

The technical solutions of the embodiments of the present application will be fully and clearly described below in combination with the accompanying drawings in the embodiments of the present application. Apparently, the embodiments described herein are merely some embodiments of the present application rather than all embodiments. Other embodiments obtained by those of ordinary skill in the art based on the embodiments in the present application without making creative work shall all fall into the scope of protection of the present application.

Exemplary embodiments will be described in detail herein, with the illustrations thereof represented in the drawings. When the following descriptions involve the drawings, like numerals in different drawings refer to like or similar elements unless otherwise indicated. The embodiments described in the following examples do not represent all embodiments consistent with the present application. Rather, they are merely examples of apparatuses and methods consistent with some aspects of the present application as detailed in the appended claims.

The terms used in the present application are for the purpose of describing particular embodiments only, and are not intended to limit the present application. Terms determined by "a", "the" and "said" in their singular forms in the present application and the appended claims are also intended to include plurality, unless clearly indicated otherwise in the context. It should also be understood that the term "and/or" as used herein refers to and includes any and all possible combinations of one or more of the associated listed items. Unless otherwise stated, "connect" or "connect with" or the like is not limited to physical or mechanical connection but includes an electrical connection where direct or indirect.

A cable power loss cost model in the related arts only involves an annual average utilization hour number and a wind turbine rated power of a wind farm. On one hand, the cable power loss cost model neglects influence of an along-cable voltage drop and a reactive power of the wind farm; on the other hand, the cable power loss cost model assumes that all wind turbines output energy under the rated power. But, the wind turbines in the site are in a non-rated working state most of the time, and due to wake effect between wind turbines, different wind turbines in the site output different powers at a same time. Therefore, the calculation process and the calculation result are not reasonable. Thus, there is a great difference between an optimized result generated by the cable power loss cost model and an actual optimal result.

The method of optimizing a layout of a wind farm provided in one or more embodiments of the present application may be used to perform layout optimization for an offshore wind farm and an onshore wind farm. A plurality of wind turbines are distributed in a wind farm to collect wind energy and convert it into electric energy. For a wind farm that performs long-distance electric energy transmission, and especially for a far-sea wind farm, a booster station is built to reduce a cable transmission loss. The booster station is electrically connected with the plurality of wind turbines to collect and boost the electric energy output by the wind turbines and then transmit the electric energy over a long distance to a transformer substation connected with the booster station. For example, an offshore booster station is constructed in an offshore wind farm to collect and boost the electric energy from wind turbines and then transmit the electric energy to an onshore transformer substation.

The wind farm includes a plurality of nodes including a booster station and a plurality of wind turbines. The optimization method includes: obtaining wind turbine position coordinates of the plurality of wind turbines; and according to the wind turbine position coordinates, solving an optimization problem with minimization of an objective function of the cable cost of the wind farm as target by using meta-heuristic algorithm to obtain an optimized solution of a position coordinate of the booster station, an optimized solution of a connection relationship of the plurality of nodes and an optimized solution of cable information of a plurality of paths connecting the plurality of nodes. The connection relationship represents whether paired nodes of the plurality of nodes are connected, and the objective function includes a cable power loss determined based on a power flow of the wind farm.

In the optimization method of the embodiments of the present application, the influence of the power flow of the wind farm is taken into account to consider the influence of the along-cable voltage drop and the reactive power and thus the influence of the cable power loss on the cable cost of the wind farm is considered. Further, by using meta-heuristic algorithm, optimization is performed for the site selection of the booster station, the connection relationship of the nodes and the cable of each path at the same time. Thus, the factors considered in the optimization process will be fit for the actual working condition of the wind turbines and more comprehensive, thus making the optimization process and result more reasonable. In this way, an optimized result more approximate to the actual optimal result can be obtained and thus the optimization effect on the costs can be improved to a greater extent, thus obviously improving the overall economic performance of the electrical design of the wind farm.

Detailed descriptions are made below to the method and the system for optimizing a layout of a wind farm as well as computer readable storage medium in the present application in combination with accompanying drawings. In a case of no conflict, the following embodiments and the features in the embodiments can be mutually combined.

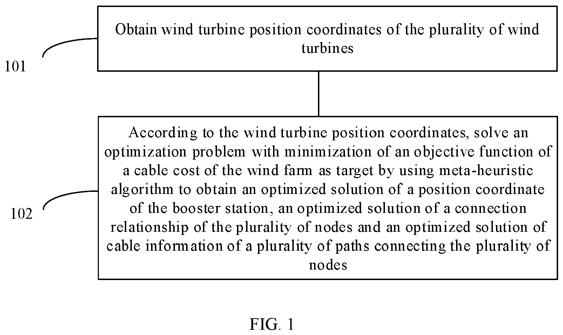

FIG. 1 is a flowchart illustrating a method 100 of optimizing a layout of a wind farm according to an embodiment of the present application. The wind farm includes a plurality of nodes including a booster station and a plurality of wind turbines. The optimization method 100 includes steps 101 and 102.

At step 101, wind turbine position coordinates of the plurality of wind turbines are obtained.

In some embodiments, the wind turbine position coordinates may include coordinates of the wind turbines in a Cartesian coordinate system. In some embodiments, the wind turbine position coordinates may include latitude and longitude coordinates of the wind turbines. In some other embodiments, the wind turbine position coordinates may include two-dimensional coordinates of the wind turbines, where a direction from west to east is a positive direction of the x axis of a two-dimensional coordinate system, a direction from south to north is a positive direction of the y axis of the two-dimensional coordinate system, and the two-dimensional coordinates of the wind turbines are coordinates in the two-dimensional coordinate system. In some embodiments, the latitude and longitude coordinates or two-dimensional coordinates of the wind turbines can be obtained and then transformed into coordinates under the Cartesian coordinate system.

In some embodiments, the wind turbine position coordinates can be read from a file recording the wind turbine position coordinates (e.g. Text file or Excel file). In some other embodiments, the wind turbine position coordinates input by a user can be received.

At step 102, according to the wind turbine position coordinates, an optimization problem with minimization of an objective function of a cable cost of the wind farm as target is solved by using meta-heuristic algorithm to obtain an optimized solution of a position coordinate of the booster station, an optimized solution of a connection relationship of the plurality of nodes and an optimized solution of cable information of a plurality of paths connecting the plurality of nodes; where the connection relationship represents whether paired nodes of the plurality of nodes are connected, and the objective function includes a cable power loss determined based on a power flow of the wind farm.

The meta-heuristic algorithm is an improvement to the heuristic algorithm as well as a product of combination of a random algorithm and a local search algorithm. The meta-heuristic algorithm may include a tabu search algorithm, a simulated annealing algorithm, a genetic algorithm, an ant colony optimization algorithm, a particle swarm optimization algorithm, an artificial fish swarm algorithm, an artificial bee colony algorithm, an artificial neural network algorithm and the like. By using the meta-heuristic algorithm, iterative optimization is performed to find out a global optimal solution or an approximate optimal solution of the optimization problem. "The optimized solution" may be a global optimal solution or approximate optimal solution.

The optimization problem is the minimization of the objective function of the cable cost of the wind farm. In some embodiments, the cable cost of the wind farm includes a cable laying cost, a cable material cost and a cable power loss cost. The cable laying cost mainly is a cost for laying and burying the cable, which is mainly related to a length of the cable. The longer the cable is, the higher the cable laying cost is. The cable material cost may be a price for buying the cable, which is related to a length and a section area of the cable. When the section area of the cable is given, the longer the cable is, the higher the cable material cost is. When the length of the cable is given, the larger the section area of the cable is, the higher the cable material cost is. The cable material cost may be equal to be a product of the cable material cost per unit length and the cable length. The cable power loss cost is a power loss cost of cable between wind turbines during a service life of the wind farm, which is related to a length of the cable and a power carried by the cable. When the power carried by the cable is given, the longer the cable is, the higher the cable power loss cost is; when the length of the cable is given, the larger the power carried by the cable is, the higher the cable power loss cost is. The larger the power carried by the cable is, the larger the section area of the cable is to be. For example, in an offshore wind farm, the cable investment cost of the wind farm including the cable laying cost and the cable material cost can account for 10% of the total investment cost. In addition to the investment cost, the cable power loss cost also takes a large proportion in the full service life of the wind farm. Therefore, during a design stage, it is also very important to take into account the cable power loss cost so as to optimize the cable cost of the wind farm.

Considering the positions of the wind turbines are known, an optimized solution of the position coordinate of the booster station, an optimized solution of the connection relationship of the plurality of nodes and an optimized solution of the cable information of a plurality of paths connecting the plurality of nodes are found so as to minimize the cable cost of the wind farm, thus achieving optimization on the layout of the wind farm. When the position of the booster station is different, the cable length from the wind turbines to the booster station will be different, thereby affecting the cable cost of the wind farm. In this case, finding the optimized solution of the position coordinate of the booster station will be helpful to optimizing the cost of the wind farm. The position coordinate of the booster station may include a position coordinate of the booster station under the Cartesian coordinate system. In some embodiments, the position coordinate of the booster station may include a latitude and longitude coordinate of the booster station. In some other embodiments, the position coordinate of the booster station may include a two-dimensional coordinate of the booster station. In some embodiments, the latitude and longitude coordinate or two-dimensional coordinate of the booster station can be obtained and then transformed into a coordinate under the Cartesian coordinate system.

The connection relationship represents whether connection is present between a plurality of wind turbines and between the wind turbines and the booster station. In some embodiments, "1" represents connection and "0" represents no connection. In some other embodiments, "0" represents connection and " 1" represents no connection. The connection relationship of the plurality of nodes can reflect connection structure of the cable. When the positions of the wind turbines are known, after the position coordinate of the booster station and the connection relationship of the plurality of nodes are obtained, the length of the cable of each path connecting two nodes can be determined. With a different connection relationship, the cable paths may be different and the cable length may also be different. Further, the number of the wind turbines carried by each cable may be different. When a cable is connected with different wind turbines and carries a different number of wind turbines, a voltage drop at both ends of the cable and a current flowing through the cable may be different and the power carried by the cable may also be different. Therefore, the connection relationship affects the cable cost of the wind farm. As a result, optimization on the connection relationship can improve the economic performance of the wind farm.

In some embodiments, the cable information may include at least one of a section area, a resistance value per unit length and a current carrying capacity. In some embodiments, the cable information may also include a price per unit length. In some embodiments, the cable information may include a cable type. Different cable section areas correspond to different cable types. With a proper cable chosen, the cost can be minimized while the current carrying capacity is satisfied. The position of the booster station, the connection relationship, and the cable of each path all have impact on the cable cost of the wind farm. The position of the booster station and the connection relationship affect each other and further affect the cable of each path. Thus, comprehensive optimization can be performed on the position coordinate of the booster station, the connection relationship of the plurality of nodes and the cable of each path at the same time so as to minimize the cost.

The objective function includes the cable power loss and the influence of the cable power loss on the cable cost of the wind farm is considered. The cable power loss may be determined based on a power flow of the wind farm. Based on the non-convexity of the power flow of the wind farm, the influence of the cable power loss of the wind farm on the cable cost of the wind farm is considered. In the optimization method, the influence of the power flow of the wind farm and the influence of the along-cable voltage drop and the reactive power are considered. Thus, the influence of the cable power loss on the cable cost of the wind farm can be considered. By using meta-heuristic algorithm, optimization is performed for the site selection of the booster station, the connection relationship of the nodes and the cable of each path at the same time. Thus, the factors considered in the optimization process will be fitter for the actual working condition of the wind turbines and more comprehensive, thus making the optimization process and result more reasonable. In this way, an optimized result more approximate to the actual optimal result can be obtained and thus the optimization effect on the costs can be improved to a greater extent, thus obviously improving the overall economic performance of the electrical design of the wind farm.

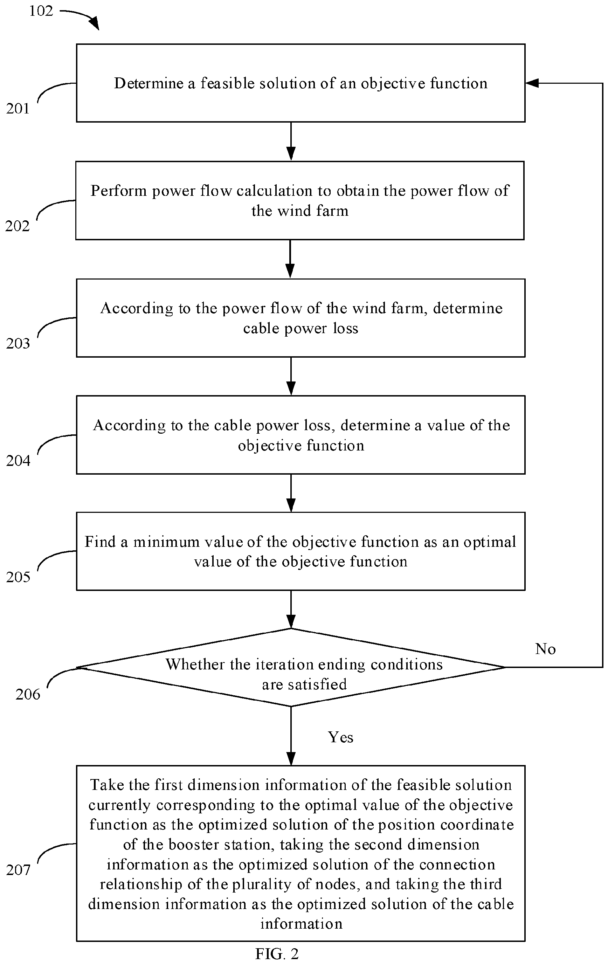

FIG. 2 is a sub-flowchart of step 102 of solving an optimization problem with minimization of the objective function of the cable cost of the wind farm as target by using meta-heuristic algorithm. The step 102 includes steps 201 to 207. In some embodiments, the step 102 includes performing an optimization iteration step until iteration ending conditions are satisfied. The optimization iteration step includes steps 201 to 206.

At step 201, a feasible solution of the objective function is determined, where the feasible solution includes first dimension information representing a position coordinate of the booster station, second dimension information representing connection relationship of the plurality of nodes and third dimension information representing the cable information of each path corresponding to the connection relationship.

In some embodiments, determining the feasible solution f of the objective function includes: initializing the feasible solution. In a first iteration, the feasible solution is firstly initialized and the feasible solution is generated randomly in a solving space. In some embodiments, the meta-heuristic algorithm includes a particle swarm algorithm. By using the particle swarm algorithm, the optimization problem is solved to obtain the optimized solution of the position coordinate of the booster station, the optimized solution of the connection relationship of the plurality of nodes and the optimized solution of the cable information. One particle is one feasible solution. Initializing the feasible solution includes initializing a position and a velocity of the particles, namely, the position and the velocity of the particles are generated randomly in a D-dimensional search space. In the present embodiment, the D-dimensional search space is a three-dimensional search space.

In some embodiments, before the feasible solution is initialized, parameters of the meta-heuristic algorithm are initialized. Parameters of the particle swarm algorithm are initialized where the parameters include an inertia weight w, learning factors C1, C2 and a random probability value.

In some embodiments, determining the feasible solution of the objective function includes updating the feasible solution. After one iteration is completed, the feasible solution can be updated for next iteration. In some embodiments, updating the feasible solution includes updating the position and the velocity of the particles.

In some embodiments, with the plurality of nodes as vertices and the booster station as an initial vertex, a random tree is established to determine the second dimension information so as to obtain the connection relationship of the plurality of nodes. The electric energy of the wind turbines is collected to the booster station. Thus, the booster station is taken as the initial vertex and the wind turbines are taken as other vertices of the random tree. Each branch of the random tree is a path connecting two nodes. Therefore, the connection relationship of the nodes can be obtained by generating the random tree. In some embodiments, lengths of the branches of the random tree can be determined so as to determine the lengths of the cables connecting the nodes. The lengths of the branches of the random tree can be determined based on the first dimension information (the position coordinate of the booster station) and the coordinates of the wind turbines, i.e. the coordinate of the initial vertex and the coordinates of other vertices.

In some embodiments, establishing the random tree includes: by using the meta-heuristic algorithm, selecting vertices from the plurality of wind turbines until the plurality of wind turbines are all selected. After the booster station is selected as the initial vertex, other vertices are selected randomly based on the meta-heuristic algorithm to make branches so as to generate a random tree. In some embodiments, vertices may be selected from the plurality of wind turbines based on the particle swarm algorithm.

In some embodiments, the wind turbines and the booster station of the wind farm may be numbered, and the following sets and matrices are defined.
Set I includes vertices already connected in the random tree;
Set II includes vertices not yet connected in the random tree;
Set III includes the length of each branch (each path) of the set I;
Set IV includes the number of the wind turbines carried on each branch in the random tree;

Adjacency matrix includes a distance between each pair of adjacent vertices.

During initialization, the layout of the random tree is made randomly and the sets I, III and IV are all empty, and all vertices are stored in the set II. During the generation process of the random tree, starting from a given vertex (booster station), the vertex is transferred from the set II to the set I. Then, a new vertex (wind turbine) in the set II is selected randomly by using the meta-heuristic algorithm and then transferred from the set II to the set I and a branch is made. At the same time, according to corresponding information in the adjacency matrix, a length of the newly-made branch (the cable length) is added to the set III and the number of the wind turbines carried by the corresponding branch in the set IV is increased by 1. In this way, vertex selection is performed until all vertices are selected, and as a result, the set II is empty and hence this process is ended. In this way, by using the meta-heuristic algorithm, vertices are selected from the plurality of wind turbines until the plurality of wind turbines are all selected; further, with the booster station as an initial vertex, the random tree is established, and the number of the wind turbines carried by each path and the cable length of each path are obtained. The adjacency matrix may be determined based on the first dimension information (position coordinate of the booster station) and the coordinates of the wind turbines.

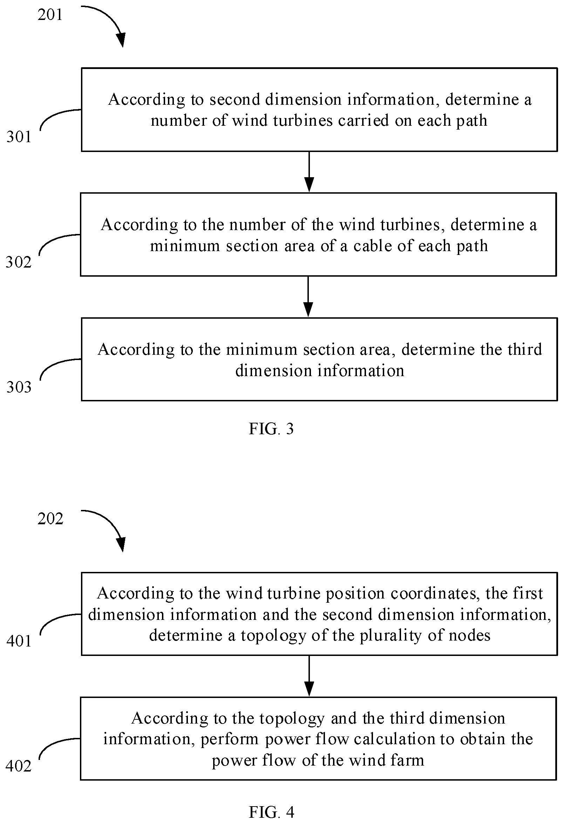

In some embodiments, as shown in FIG. 3, the step 201 of determining the feasible solution of the objective function includes steps 301 to 303. At step 301, according to the second dimension information, a number of the wind turbines carried on each path is determined. After the connection relationship is determined, the number of the wind turbines carried by each path may be obtained.

At step 302, according to the number of the wind turbines, a minimum section area of a cable of each path is determined. The minimum section area of the cable of each path is a minimum section area satisfying the current carrying capacity. According to the number of the wind turbines carried by each path, the current carrying capacity of each path may be determined so as to determine the minimum section area.

At step 303, according to the minimum section area, the third dimension information is determined, where a cable section area of each path corresponding to the third dimension information is not less than the minimum section area. The cable section area corresponding to the third dimension information of the feasible solution is not less than the minimum section area. In some embodiments, the cable section area corresponding to the third dimension information of the feasible solution is greater than the minimum section area, so as to ensure the selected cable can satisfy the requirements of the current carrying capacity.

In some embodiments, the third dimension information may include a cable type. In some other embodiments, the third dimension information may include a cable section area. A set of multiple cable information can be obtained and the cable of each path can be selected from the set to ensure the section area of the cable of each path is not less than the minimum section area of the cable of the path. In some embodiments, the cable information may include the cable type and/or the cable section area. In some embodiments, the cable information may also include a resistance per unit length, a current carrying capacity and a price per unit length of the cables corresponding to different cable section areas.

In some embodiments, with the above method, the number of the wind turbines carried by each branch is stored in the set IV, such that the minimum cable section area of each branch can be determined. The selection scope of the third dimension information only includes cable information corresponding to cables not less than the minimum cable section area.

Returning to FIG. 2, at step 202, according to the wind turbine position coordinates, the first dimension information, the second dimension information and the third dimension information, power flow calculation is performed to obtain the power flow of the wind farm.

In some embodiments, based on the particles determined this time, power flow calculation is performed to obtain the power flow of the wind farm. The particles include the first dimension information, the second dimension information and the third dimension information. According to the wind turbine position coordinates, the position coordinate of the booster station, the connection relationship of the nodes and the cable information, power flow calculation is performed. The third dimension information may include a resistance value, a capacitance value and an inductance value per unit length of the cable and may be used for performing power flow calculation. In some embodiments, the wind turbine position coordinates, the first dimension information, the second dimension information and the third dimension information may be input into a cost calculation model of the objective function of the cable cost of the wind farm to calculate the power flow.

In some embodiments, as shown in FIG. 4, the step 202 of performing power flow calculation includes steps 401 and 402. At step 401, according to the wind turbine position coordinates, the first dimension information and the second dimension information, a topology of the plurality of nodes is determined, where the topology includes positions of the nodes, and relative positions between the nodes and a connection relationship between the nodes. The topology includes the positions of the wind turbines, the position of the booster station, the relative positions between the wind turbines and between the wind turbines and the booster station, and the connection relationship between the wind turbines and between the wind turbines and the booster station. In some embodiments, a coordinate matrix is determined, where the coordinate matrix includes the wind turbine position coordinates and the first dimension information (the position coordinate of the booster station). Based on the coordinate matrix, a relative position matrix of the nodes is determined. With the booster station as an initial vertex, based on the relative position matrix and the second dimension information (connection relationship), a topology of a plurality of nodes is generated. The topology reflects the layout of the wind farm. Based on the relative position relationship between the nodes, the length of each path can be determined.

At step 402, according to the topology and the third dimension information, power flow calculation is performed to obtain the power flow of the wind farm. The third dimension information may include a resistance value, a capacitance value and an inductance value per unit length of the cable.

According to the positions of the wind turbines, the position of the booster station, the relative positions between the wind turbines and between the wind turbines and the booster station, the connection relationship between the wind turbines and between the wind turbines and the booster station, and the resistance value, the capacitance value and the inductance value per unit length of the cable, the power flow of the wind farm is calculated to obtain a voltage of each node and a current of each path. In this way, the power flow of the wind farm can be accurately calculated.

In some embodiments, the optimization method 100 includes: obtaining multiple wind condition/wind regime information of the wind farm. In some embodiments, during a planning stage of the construction of the wind farm, wind resource data may be collected. Based on the wind resource data, a wind rose diagram may be drawn. In some embodiments, based on wind direction, the wind resource data may be divided into several groups, for example, into 36 groups with each group covering 10°. The wind distribution of each group may be expressed by Weibull distribution to obtain a wind velocity Weibulll distribution. According to different wind directions and the corresponding wind velocity Weibull distributions, a wind rose diagram may be drawn. The wind rose diagram reflects the distribution of the wind direction and the wind velocity of the wind farm in a time period. The wind condition information may include the wind direction, the wind velocity range, and a probability of being in a corresponding wind velocity range in the wind rose diagram.

In some embodiments, according to the wind turbine position coordinates and the wind condition information, output powers of each wind turbine under multiple wind conditions are determined. In some embodiments, according to the wind turbine position coordinates and the wind condition information, the output powers are determined based on a wake model. Based on the wake model, the output powers of each wind turbine under the multiple wind conditions are determined. Under different wind conditions, the influence of the wake effect on the output powers of the wind turbines is considered and power generation amounts of each wind turbine under different wind conditions are calculated.

In some embodiments, power flow calculation is performed based on the output powers of the plurality of wind turbines under the multiple wind conditions to obtain the power flows of the wind farm under the multiple wind conditions. Thus, the power flow of the wind farm under each wind condition can be calculated. Under each wind condition, power flow calculation is performed based on the output powers of a plurality of wind turbines under the corresponding wind condition to obtain the power flow of the wind farm under the corresponding wind condition. Due to the wake effect between wind turbines, different wind turbines in the wind farm may output different powers at a same time. Based on the wake model, the output powers of the wind turbines under different wind conditions may be reasonably estimated with wind resource distribution characteristics of the wind farm and the wake effect taken into consideration. Thus, in this way, the power flow of the wind farm can be more accurately calculated, and the actual situations of the wind farm are better satisfied, so as to obtain an optimized wind farm layout. By accurate power flow calculation, more specific technical limitation may be made for the wind farm, for example, it is stated that the along-cable voltage drop is not higher than 5%, the voltage change range of each path is within a specified range, and/or the voltage phase angle change is within a specified phase angle range.

In some embodiments, according to the output powers of the plurality of wind turbines of the wind farm under the multiple wind conditions, the topology of the plurality of nodes, and the third dimension information of the feasible solution (cable information of each path), the power flows of the wind farm under the multiple wind conditions are calculated. Under each wind condition, according to the output powers of the plurality of wind turbines, the topology of the plurality of nodes and the third dimension information of the feasible solution, the power flow of the wind farm under the corresponding wind condition is calculated. In this way, the power flow of the wind farm can be accurately calculated.

Returning to FIG. 2, at step 203, a cable power loss is determined based on the power flow of the wind farm.

In some embodiments, the power flow may be calculated based on the Newton-Raphson method and the cable power loss may thus be calculated.

In some embodiments, the cable power losses of the wind farm under the multiple wind conditions are determined based on the power flows of the wind farm under the multiple wind conditions. Under each wind condition, according to the power flow of the wind farm under the corresponding wind condition, the cable power loss of the wind farm under the corresponding wind condition is determined.

At step 204, a value of the objective function is determined based on the cable power loss.

The determined cable power loss is substituted into the objective function to obtain the value of the objective function. The value of the objective function is the cable cost of the wind farm. Thus, the value of the cable cost of the wind farm including the cable power loss cost can be obtained. In some embodiments, in the particle swarm algorithm, the objective function may be referred to as fitness function and the value of the objective function may be referred to as fitness value.

In some embodiments, according to the cable power losses under the multiple wind conditions, the value of the objective function is determined. In some embodiments, the objective function includes a sum of the cable power losses under the multiple wind conditions, and the wind farm cost includes a sum of the cable power loss costs under the multiple wind conditions. The cable power losses under the multiple wind conditions are substituted into the objective function to obtain the value of the cable cost of the wind farm including an annual power loss cost of the wind farm.

In some embodiments, the optimization iteration step includes: according to the third dimension information and the power flow of the wind farm, determining a cable medium loss; according to the cable medium loss, determining the value of the objective function. The value of the objective function includes the cable power loss cost and a cable medium loss cost. The third dimension information includes a resistance value of the cable of each path, and the power flow of the wind farm includes a current flowing through the cable of each path and/or a voltage at both ends of the cable. The cable medium loss may be calculated based on the resistance value and the current (or voltage). The cable cost of the wind farm includes the cable medium loss cost. According to the cable power loss cost and the cable medium loss, the cable cost of the wind farm is calculated to obtain the value of the cable cost of the wind farm including the cable power loss cost and the cable medium loss cost. Thus, the loss cost of the wind farm can be considered in a more comprehensive way to enable the optimization to be fitter for the actual situations and more completed.

In some embodiments, the wind farm includes a transformer substation/converting station for receiving an electric energy output by the booster station. The transformer substation may further transmit the electric energy to a main power grid. The transformer substation may be connected with a plurality of booster stations to receive electric energy from the plurality of booster stations. In some embodiments, the booster station is an offshore booster station and the transformer substation is an onshore transformer substation. The optimization method includes: obtaining a position coordinate of the transformer substation. The position coordinate of the transformer substation may include a coordinate under Cartesian coordinate system, or a latitude and longitude coordinate or two-dimensional coordinate. In some embodiments, the position of the transformer substation may be determined/set. In some other embodiments, the position of the transformer substation may be solved based on the meta-heuristic algorithm.

The objective function includes a power transmission cable cost from the booster station to the transformer substation. The power transmission cable cost is related to a cable length between the booster station and the transformer substation and a cable section area. The position of the booster station affects the cable length and the cable section area is related to the electric energy transmitted between the booster station and the transformer substation. The power transmission cable cost includes the circuit power loss cost, and may further include a cable medium loss in some embodiments.

The optimization iteration step includes: according to the position coordinate of the transformer substation and the first dimension information, determining a power transmission cable cost; and, according to the power transmission cable cost, determining a value of the objective function. The objective function further includes the power transmission cable cost. According to the position coordinate of the transformer substation and the position coordinate of the booster station, a power transmission cable length may be determined and thus the power transmission cable cost. In some embodiments, according to the position coordinate of the transformer substation, the first dimension information and the power flow of the wind farm, the power transmission cable cost is determined. The electric energy collected into the transformer substation may be determined based on the power flow of the wind farm and the section area of the power transmission cable can be determined, thus determining the power transmission cable cost.

The value of the objective function includes the power transmission cable cost, such that the cable cost of the wind farm can be considered in a more comprehensive way to enable the optimization to be fitter for the actual situations and more completed. The wind farm includes a power collection system and a power transmission system. The power collection system includes a plurality of wind turbines and cables connecting the wind turbines with the booster station, and the power transmission system includes the booster station, the transformer substation and a cable connecting the booster station with the transformer substation. In the present embodiment, the cable cost of the power collection system and the cable cost of the power transmission system both are considered. During the optimization process, the cable cost of the wind farm is fully considered. The value of the objective function can be calculated using the above cost calculation model of the objective function.

With continuous reference to FIG. 2, at step 205, a minimum value of the objective function is found as an optimal value of the objective function. In some embodiments, in the particle swarm algorithm, a current value of the objective function (fitness value) is compared with an individual optimal value. If the value is superior to the individual optimal value, the position of the individual optimal value is the position of the current particle, that is, the current feasible solution is taken as a solution corresponding to the individual optimal value. Further, the current value of the objective function is compared with a swarm global optimal value. If the current value of the objective function is superior to the swarm global optimal value, the position corresponding to the swarm global optimal value is set to the position of the current particle, namely, the current feasible solution is taken as a solution corresponding to the swarm global optimal value. In each iteration, the minimum value of the objective function is found as the optimal value of the objective function. In this way, the minimum value of the cable cost of the wind farm is found in each iteration. Thus, iteration update is performed to find an individual with a minimum economic cost.

At step 206, whether iteration ending conditions are satisfied is determined. Satisfying the iteration ending conditions may include: reaching a maximum iteration number and/or reaching an iteration time threshold. When the iteration ending conditions are not satisfied, iteration is continued.

At step 207, when the iteration ending conditions are satisfied, the first dimension information of the feasible solution corresponding to the current optimal value of the objective function is taken as an optimized solution of the position coordinate of the booster station, the second dimension information is taken as an optimized solution of the connection relationship of the plurality of nodes and the third dimension information is taken as an optimized solution of the cable information. When the iteration ends, the current optimal solution of the objective function is found with the corresponding feasible solution as an optimized result. In this way, the optimized result of the layout of the wind farm can be obtained, and the position of the booster station, the connection relationship of the wind turbines, the connection relationship of the wind turbines and the booster station, and the cable information of each path are determined. In some embodiments, the cable information includes a cable type. In some other embodiments, the cable information includes a cable section area and the like. A corresponding cable type may be selected based on the cable information.

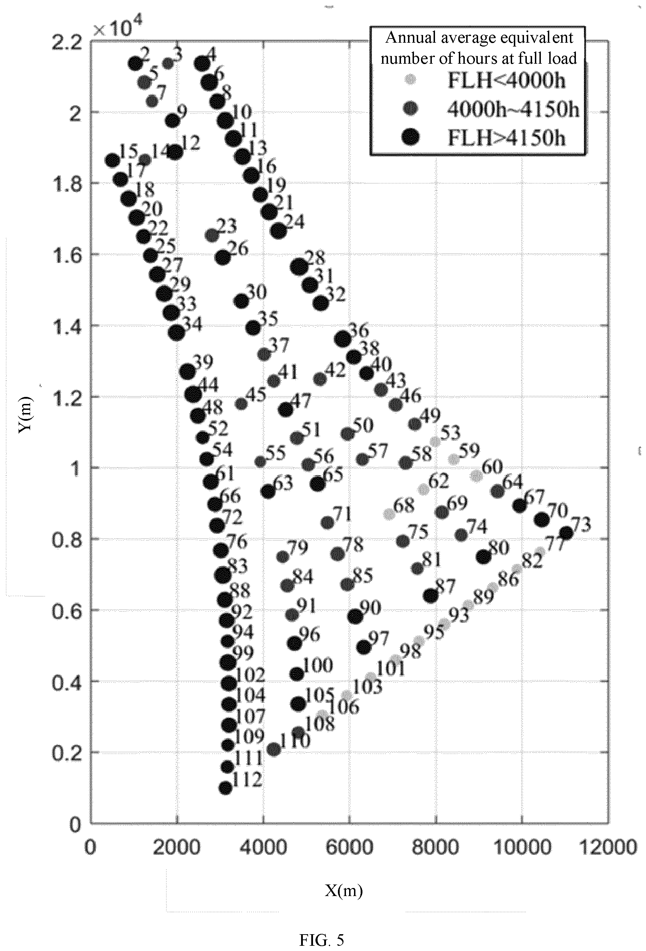

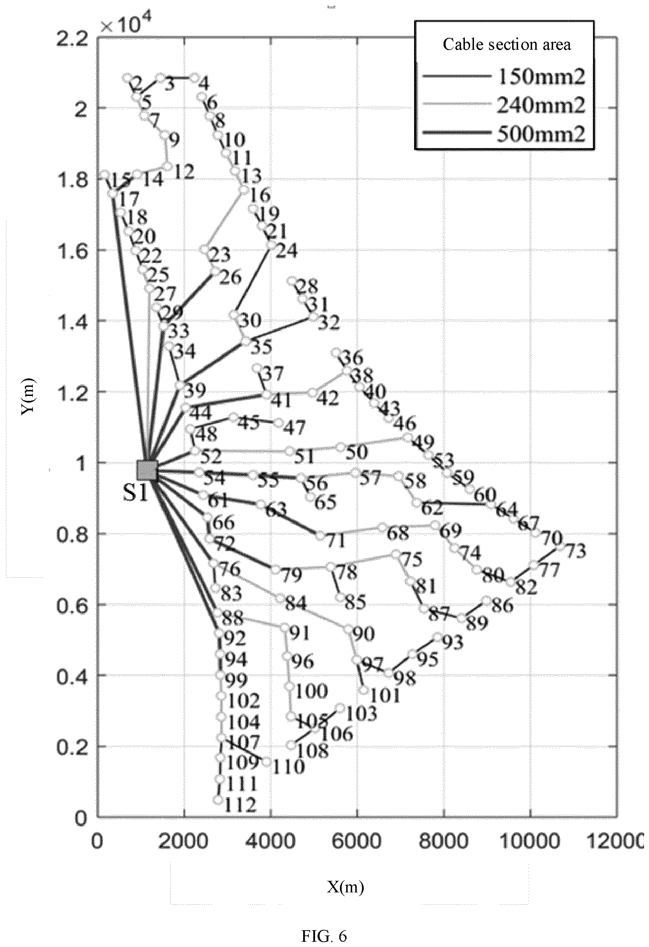

FIG. 5 is a schematic diagram illustrating positions of wind turbines in a wind farm. FIG. 6 is a schematic diagram illustrating a wind farm layout obtained by performing layout optimization for the wind farm of FIG. 5 using the method of the embodiments of the present application. FIG. 5 shows the position and an annual average equivalent full load hour number of each wind turbine of the wind farm. The wind turbines are numbered. In FIG. 6, S1 refers to the position of the booster station. FIG. 4 shows the position of the booster station, the connection relationship between the wind turbines and between the wind turbines and the booster station and the cable section area after layout optimization. In the method of the embodiments of the present application, the influence of the power flow of the wind farm on the cable power loss cost is considered, making the layout optimization more reasonable.

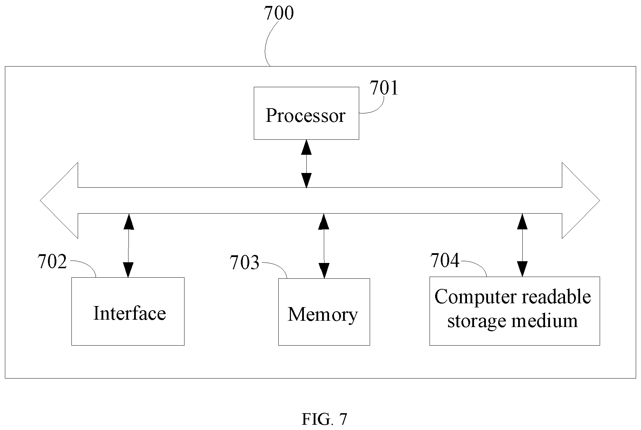

FIG. 7 is a block diagram illustrating an example of a system 700 for optimizing a layout of a wind farm. The optimization system 700 includes one or more processors 701 used to perform the optimization method 100. In some embodiments, the optimization system 700 may include a computer readable storage medium 704. The computer readable storage medium 704 can store a program invokable by the one or more processors 701 and may include a non-volatile storage medium. In some embodiments, the optimization system 700 may include a memory 703 and an interface 702. In some embodiments, the optimization system 700 may further include other hardware based on actual applications.

The computer readable storage medium 704 according to the embodiments of the present application stores a program thereon which may be executed by the processor 701 to cause the processor to perform the optimization method 100.

In the examples of the present application, the form of computer program products implemented on one or more storage mediums containing program codes including but not limited to magnetic disk memory, a CD-ROM, and optical memory and so on may be adopted. The computer readable storage medium includes permanent, non-permanent, mobile and non-mobile media, which can realize information storage by any method or technology. The information may be computer readable instructions, data structures, program modules and other data. The examples of the computer readable storage medium include but not limited to: phase change random access memory (PRAM), a Static Random Access Memory (SRAM), a Dynamic Random Access Memory (DRAM), and other types of RAMs, Read-Only Memory (ROM), an Electrically-Erasable Programmable Read-Only Memory (EEPROM), a Flash Memory, or other memory technology, CD-ROM, digital versatile disc (DVD) or other optical storage, cassette type magnetic tape, magnetic disk storage or other magnetic storage device or other non-transmission medium for storing information accessible by computing devices.

It shall be noted that the relational terms such as "first" and "second" used herein are merely intended to distinguish one entity or operation from another entity or operation rather than to require or imply any such actual relation or order existing between these entities or operations. Also, the term "including", "containing" or any variation thereof is intended to encompass non-exclusive inclusion, so that a process, method, article or device including a series of elements includes not only those elements but also other elements not listed explicitly or those elements inherent to such a process, method, article or device. Without more limitations, an element defined by the statement "including a..." shall not be precluded to include additional same elements present in a process, method, article or device including the elements.

The above are detailed descriptions of a method and an apparatus provided according to the embodiments of the present application. Specific examples are used herein to set forth the principles and the implementing methods of the present application, and the descriptions of the above embodiments are only meant to help understanding of the method and the core idea of the present application. Meanwhile, those of ordinary skill in the art may make alterations to the specific embodiments and the scope of application in accordance with the idea of the present application. In conclusion, the contents of the present specification shall not be interpreted as limiting to the present application.

The contents disclosed in the present patent document contain copyrighted materials. The copyright is possessed by the copyright owner. The copyright owner allows any person to copy the patent document or patent disclose existing in the official records or archives of the patent and trademark office.

## Claims

1. A method of optimizing a layout of a wind farm, the wind farm comprising a plurality of nodes and the plurality of nodes comprising a booster station and a plurality of wind turbines, **characterized in that** the optimization method comprises:
obtaining wind turbine position coordinates of the plurality of wind turbines; and
according to the wind turbine position coordinates, solving an optimization problem with minimization of an objective function of a cable cost of the wind farm as target by using meta-heuristic algorithm to obtain an optimized solution of a position coordinate of the booster station, an optimized solution of a connection relationship of the plurality of nodes and an optimized solution of cable information of a plurality of paths connecting the plurality of nodes; wherein the connection relationship represents whether paired nodes of the plurality of nodes are connected, and the objective function comprises a cable power loss determined based on a power flow of the wind farm.

2. The optimization method of claim 1, **characterized in that** solving the optimization problem with minimization of the objective function of the cable cost of the wind farm as target by using meta-heuristic algorithm comprises: performing an optimization iteration step until iteration ending conditions are satisfied, wherein the optimization iteration step comprises:
determining a feasible solution of the objective function, wherein the feasible solution comprises first dimension information representing the position coordinate of the booster station, second dimension information representing the connection relationship of the plurality of nodes and third dimension information representing the cable information of each of the paths corresponding to the connection relationship;
according to the wind turbine position coordinates, the first dimension information, the second dimension information and the third dimension information, performing power flow calculation to obtain the power flow of the wind farm;
according to the power flow of the wind farm, determining the cable power loss;
according to the cable power loss, determining a value of the objective function;
finding a minimum value of the objective function as an optimal value of the objective function;
when the iteration ending conditions are satisfied, taking the first dimension information of the feasible solution currently corresponding to the optimal value of the objective function as the optimized solution of the position coordinate of the booster station, taking the second dimension information as the optimized solution of the connection relationship of the plurality of nodes, and taking the third dimension information as the optimized solution of the cable information.

3. The optimization method of claim 2, **characterized in that**, according to the wind turbine position coordinates, the first dimension information, the second dimension information and the third dimension information, performing power flow calculation to obtain the power flow of the wind farm comprises:
according to the wind turbine position coordinates, the first dimension information and the second dimension information, determining a topology of the plurality of nodes, wherein the topology comprises positions of the nodes, and relative positions between the nodes and the connection relationship between the nodes;
according to the topology and the third dimension information, performing power flow calculation to obtain the power flow of the wind farm.

4. The optimization method of claim 2, **characterized in that**, the optimization method comprises: obtaining a plurality of wind condition information of the wind farm; wherein,
the optimization iteration step comprises:
according to the wind turbine position coordinates and the wind condition information, determining output powers of each of the wind turbines under the plurality of wind conditions;
according to output powers of the plurality of wind turbines under the plurality of wind conditions, performing power flow calculation to obtain the power flows of the wind farm under the plurality of wind conditions;
according to the power flows of the wind farm under the plurality of wind conditions, determining cable power losses under the plurality of wind conditions; and
according to the cable power losses under the plurality of wind conditions, determining the value of the objective function.

5. The optimization method of claim 4, **characterized in that**, according to the wind turbine position coordinates and the wind condition information, determining the output powers of each of the wind turbines under the plurality of wind conditions comprises:
according to the wind turbine position coordinates and the wind condition information, determining the output powers based on a wake model.

6. The optimization method of claim 2, **characterized in that**, determining the feasible solution of the objective function comprises:
according to the second dimension information, determining a number of the wind turbines carried on each of the paths;
according to the number of the wind turbines, determining a minimum section area of a cable of each of the paths; and
according to the minimum section area, determining the third dimension information, wherein a cable section area of each of the paths corresponding to the third dimension information is not less than the minimum section area.

7. The optimization method of claim 6, **characterized in that**, determining the feasible solution of the objective function comprises:
with the plurality of nodes as vertices and the booster station as an initial vertex, establishing a random tree to determine the second dimension information.

8. The optimization method of claim 7, **characterized in that**, establishing the random tree comprises:
by using meta-heuristic algorithm, selecting vertices from the plurality of wind turbines until the plurality of wind turbines are all selected.

9. The optimization method of claim 2, **characterized in that**, the optimization iteration step comprises:
according to the third dimension information and the power flow of the wind farm, determining the cable medium loss;
according to the cable medium loss, determining the value of the objective function.

10. The optimization method of claim 2, **characterized in that**, the wind farm comprises a transformer substation for receiving an electric energy output by the booster station, and the objective function comprises a power transmission cable cost from the booster station to the transformer substation; the optimization method comprises obtaining a position coordinate of the transformer substation;
the optimization iteration step comprises:
according to the position coordinate of the transformer substation and the first dimension information, determining the power transmission cable cost; and,
according to the power transmission cable cost, determining the value of the objective function.

11. The optimization method of any one of claims 1 to 10, **characterized in that**, the meta-heuristic algorithm comprises particle swarm algorithm; solving the optimization problem with minimization of the objective function of the cable cost of the wind farm as target by using meta-heuristic algorithm comprises:
by using the particle swarm algorithm, solving the optimization problem to obtain the optimized solution of the position coordinate of the booster station, the optimized solution of the connection relationship of the plurality of nodes and the optimized solution of the cable information.

12. A system for optimizing a layout of a wind farm, **characterized by** comprising one or more processors for performing the optimization method of any one of claims 1 to 11.

13. A computer readable storage medium, **characterized in that**, the computer readable storage medium stores a program thereon, wherein when the program is executed by a processor, the processor is caused to perform the optimization method of any one of claims 1 to 11.
